# EUROPÄISCHE PATENTSCHRIFT

(11) **EP 1 598 291 B1**
(45) Veröffentlichungstag und Bekanntmachung des Hinweises auf die Patenterteilung: **20.02.2008**
(21) Anmeldenummer: 05103858.6
(22) Anmeldetag: 10.05.2005
(51) Int. Cl.: B65G 1/137

(54) **Verfahren und Vorrichtung zur automatisierten Einlagerung von Waren**
Apparatus and method for automatically storing articles
Dispositif et procédé automatique de stockage d'objets

(30) Priorität: 21.05.2004 DE 102004025070; 23.09.2004 DE 102004046176
(43) Veröffentlichungstag der Anmeldung: 23.11.2005
(73) Patentinhaber: KHT Kommissionier- und Handhabungstechnik GmbH, 45881 Gelsenkirchen (DE)
(72) Erfinder: Gessner, Jürgen, Dr., 42781, Haan (DE); von Schneidemesser, Christian, 45881, Gelsenkirchen (DE)
(74) Vertreter: König, Gregor Sebastian

(56) Entgegenhaltungen:
- DE-A1- 10 102 999
- DE-C2- 19 509 951
- GB-A- 1 157 071

## Beschreibung

Die Erfindung betrifft ein Verfahren zur Einlagerung von Waren, die als im wesentlichen quaderförmige Packungseinheiten ausgebildet sind, insbesondere von Arzneimittelpackungen, in eine automatisierte Lagereinrichtung gemäß dem Gattungsbegriff des Patentanspruchs 1 sowie eine Vorrichtung zur Durchführung dieses Verfahrens.

Aus der DE 195 09 951 C2 ist eine Vorrichtung bekannt, die insbesondere zur automatischen unsortierten Lagerung von kleinteiligen, quaderförmigen Packungen wie Arzneimittelpackungen vorgesehen ist und als Übergabevorrichtung einen Endlos-Förderer aufweist, der sich innerhalb des Regals zwischen zwei Regalböden erstreckt und von einer Aufgabestation für neu einzulagernde Waren bis in den Arbeitsbereich eines Regalbediengeräts führt. Der Endlos-Förderer, der insbesondere als Förderband ausgebildet ist, führt dabei von der Schmalseite der Regalanlage, an der die Aufgabestation für die Waren angeordnet ist, in den Regalbereich hinein und verlängert damit zusätzlich die Baulänge des ohnehin im Regalfall langgestreckten Regals. Der Endlos-Förderer hat nicht nur die Aufgabe, die neu einzulagernden Waren in den Arbeitsbereich des Regalbediengeräts von außen hineinzuführen, sondern soll darüber hinaus auch als Zwischenspeicher eine gewisse Pufferfunktion für den Strom der einzulagernden Waren wahrnehmen. Die neu einzulagernden Waren müssen nämlich nicht nur vor der Aufnahme durch das Regalbediengerät identifiziert, sondern auch hinsichtlich ihrer Abmessungen vermessen werden, damit ein geeigneter Lagerplatz von der Steuereinheit der Lagereinrichtung gefunden werden kann.

Sowohl die Identifizierung als auch die Vermessung der Waren (nachfolgend auch als Gegenstände bezeichnet) kann in an sich bekannter Weise vollständig maschinell ausgeführt werden. Zur Verminderung des Anlagenaufwandes ist es jedoch vielfach üblich, die Identifizierung im Rahmen eines Handhabungsvorgangs von einer Bedienperson vornehmen zu lassen, die den Barcode des Gegenstands an einem entsprechenden Lesegerät vorbeiführt und dann den Gegenstand auf den Endlos-Förderer auflegt. Nach Beendigung des Auflegens neu einzulagernder Gegenstände oder nach Erreichen einer vollständigen Belegung des Endlos-Förderers, auf dem die Gegenstände einzeln in einer Kette nebeneinander im Abstand aufgelegt sind, werden die Gegenstände nacheinander durch das Regalbediengerät aufgenommen und auf einen freien Lagerplatz eines der Regalböden eingelagert. Die Positionen, an denen die einzelnen Gegenstände auf dem Endlos-Förderer liegen sind der Rechnersteuerung für den gezielten Zugriff des Regalbediengeräts bekannt. Bei der Einlagerung besteht die Möglichkeit des wahlfreien Zugriffs des Regalbediengeräts auf die einzulagernden Gegenstände auf dem Endlos-Förderer. Sobald ein am äußersten Ende des Endlos-Förderers aufliegender Gegenstand dabei abgeräumt wurde, kann im Bedarfsfall ein weiterer neu einzulagernder Gegenstand nach Durchführung einer entsprechenden Vorschubbewegung auf dem Endlos-Förderer abgelegt werden. Solange aber das äußerste Ende des Endlosförderers belegt bleibt, darf keine Vorschubbewegung ausgeführt werden, so dass dann trotz an sich freier Plätze z.B. im Mittelbereich oder am Anfang des Endlos-Förderers keine neuen Gegenstände am Aufgabeende des Endlos-Förderers aufgelegt werden können. Bei der Einlagerung steht der Endlos-Förderer zumindest während des Anfahrens einer Ablageposition auf dem Endlos-Förderer durch das Regalbediengerät still. Im Falle der Einlagerung umfangreicher Sendungen mit neu einzulagernden Waren kann es daher wegen des begrenzten Fassungsvermögens des Endlos-Förderers vorkommen, dass die Einlagerung durch die Bedienperson in mehreren Teilschritten mit entsprechender Wartezeit dazwischen vorgenommen werden muss. Diese Wartezeit ist umso länger, je größer der Zeitbedarf vom Ergreifen einzelner Gegenstände auf dem Endlos-Förderer bis zur endgültigen Einlagerung auf einem der Regalböden ist. Bei dieser bekannten Lagereinrichtung werden üblicherweise Lagerböden mit einer Tiefe von bis zu etwa 250 mm benutzt. Im Regelfall werden die einzelnen Gegenstände in Richtung der Längserstreckung der Regalböden, also in Fahrtrichtung des Regalbediengeräts jeweils einzeln nebeneinander abgelegt. Bei gleichartigen Artikeln können auch, sofern der verfügbare Platz ausreicht, zwei Gegenstände unter Ausnutzung der Breite des jeweiligen Regalbodens in Richtung der Breite hintereinander abgelegt werden.

Die Ablage der Waren erfolgt bei der Anlage gemäß DE 195 09 951 C2 so, dass das Regalbediengerät eine von der Steuerung ausgewählte, ausreichend große freie Lücke auf einem der Regalböden anfährt und die jeweilige Ware dort ablegt. Dabei speichert die Steuerung den Ablageort so, dass das Regalbediengerät im Falle einer erforderlichen Auslagerung der Ware diesen Ort gezielt wieder anfahren kann: sie speichert nämlich eine identifizierende Größe für den jeweiligen Regalboden, dessen Höhenposition gespeichert ist, und auch die horizontale Koordinate des Ablageorts sowie die Kantenlänge der betroffenen Ware in Richtung dieser horizontalen Koordinate. Somit verfügt die Steuerung auch über alle erforderlichen Angaben zur Bestimmung der freien Lücken zwischen den eingelagerten Waren.

Dieses Lagerungsprinzip zeichnet sich durch besondere Einfachheit aus, da die einzelnen Waren jeweils hinsichtlich Packungsgröße und Artikelart ungeordnet (chaotische Lagerung) und lediglich nebeneinanderliegend entlang der einzelnen Regalböden aufgereiht werden.

Aus der Firmenbroschüre "Wie Sie es brauchen: Kommissionier-Automat der Extraklasse. Universell, effizient, einfach doppelt gut" der Apostore GmbH ist ein automatisiertes Arzneimittellager bekannt, das in ähnlicher Weise arbeitet, also Waren mittels eines Regalbediengeräts auf Regalböden ungeordnet im Sinne einer chaotischen Lagerung, wie sie in Hochregallagern generell üblich ist, ablegt und bei Bedarf automatisch wieder auslagert. Zur Erhöhung der auf die benötigte Grundfläche eines solchen Lagers bezogenen Lagerkapazität werden dort deutlich breitere (bis zu 400mm tief) Regalböden eingesetzt und ist die Lagerfläche der Regalböden in so genannte virtuelle Kanäle aufgeteilt, in denen jeweils eine oder vorzugsweise mehrere Waren quer zur Längserstreckung der Regalböden hintereinanderliegend abgelegt werden können. Die Kanalgrenzen bilden dabei in Längsrichtung der Regalböden jeweils Zwischenräume im Sinne eines Mindestabstands zwischen den in benachbarten Kanälen eingelagerten Waren. Ein solcher Mindestabstand ist erforderlich, damit ein ordnungsgemäßes Ein- und Auslagern ohne Verschiebung benachbart gelagerter Waren erfolgen kann, da das Regalbediengerät, von denen sich in einer Regalgasse zwischen sich gegenüberliegenden Regalen jeweils zwei befinden, jeweils mit einem Backengreifer zur Manipulation der Waren ausgestattet ist. Bei dieser Anlage muss die Steuerung selbstverständlich, um die eingelagerten Waren gezielt wieder auffinden zu können (ohne Notwendigkeit einer erneuten Identifizierung einzelner Waren), nicht nur die Position des jeweils für die Ablage auf einem Regalboden gewählten freien Lagerplatzes oder Kanals, sondern auch die Position innerhalb des Kanals (also in Richtung der Regaltiefe) aller eingelagerten Waren kennen und speichern. Wenn die Steuerung feststellt, dass ein Kanal oder freier Lagerplatz hinsichtlich seiner Tiefe (quer zur Längserstreckung des Regalbodens) durch eine oder mehrere eingelagerte Waren nur teilweise belegt ist, kann eine neu einzulagernde Ware, sofern deren Länge in Richtung der Regaltiefe nicht größer ist als die noch freie Regaltiefe, ebenfalls in diesen Kanal eingelagert werden. Voraussetzung hierfür ist allerdings nicht nur, dass die Breite der Ware (in Längsrichtung des Regalbodens) nicht größer ist als die Breite des jeweiligen Kanals und auch nicht größer ist als die Breite der bereits in diesem Kanal eingelagerten, unmittelbar dahinterliegenden Ware. Letztere Bedingung ist deswegen notwendig, damit das mit einem Backengreifer ausgerüstete Regalbediengerät im Bedarfsfall jeden beliebigen Gegenstand aus einer Reihe mehrerer an gleicher Regallängsposition liegender Gegenstände mit einem einzigen Zugriff erfassen und wieder auslagern kann. Damit ist in einem solchen Fall zwangsläufig aber auch eine Herausnahme der vor diesem Gegenstand liegenden Gegenstände verbunden, so dass nach erfolgter Abgabe des eigentlich angesprochenen Gegenstands die übrigen nicht gewünschten Gegenstände wieder auf die gleiche oder eine andere Lagerposition zurückgeschoben werden müssen. Das Ablageprinzip innerhalb eines Kanals ist also eine Anordnung der Waren (im Grundriss gesehen) nach einer sogenannten Tannenbaum-Form, wobei die Spitze dieses Tannenbaums zum Regalbediengerät weisen muss. Allenfalls dürfen gleich breite Packungen unmittelbar hintereinander liegen.

Für jeden Einlagerungsvorgang muss das Regalbediengerät zwischen dem Ort, an dem eine neu einzulagernde Ware für die Einlagerung bereitgestellt wird, und dem vorgesehenen Lagerort im Regal verfahren werden. Während eines solchen Einlagerungsvorgangs steht das Regalbediengerät daher zwangsläufig nicht für etwaige Auslagerungsvorgänge zur Verfügung, so dass gegebenenfalls Wartezeiten anfallen.

Aufgabe der vorliegenden Erfindung ist es, den Zeitbedarf für die Einlagerung von Waren bei einem gattungsgemäßen Verfahren für das Regalbediengerät deutlich zu verkürzen, um die genannten Wartezeiten bei Auslagerungsaufträgen möglichst zu minimieren und die Speicherfähigkeit der Zwischenspeicherung möglichst zu verbessern; außerdem soll eine Vorrichtung zur Durchführung dieses Verfahrens angegeben werden.

Gelöst wird diese Aufgabe hinsichtlich des Verfahrens durch die im Patentanspruch 1 angegebenen Merkmale; eine Vorrichtung zur Durchführung des erfindungsgemäßen Verfahrens weist die im unabhängigen Patentanspruch 19 angegebenen Merkmale auf. Vorteilhafte Weiterbildungen der Erfindung, die beliebig miteinander kombinierbar sind, sind in den abhängigen Ansprüchen aufgeführt.

Die Erfindung geht aus von einem Verfahren zur Einlagerung von Waren, die im Wesentlichen quaderförmige Packungseinheiten bilden, insbesondere von Arzneimittelpackungen. Zur Lagerung wird eine automatisierte Lagervorrichtung mit einer Mehrzahl von im Abstand übereinander angeordneten Regalböden eingesetzt, auf denen die Waren jeweils in der Fläche nebeneinander (d.h. nicht übereinander gestapelt), insbesondere in sogenannten virtuellen Kanälen (d.h. Kanäle ohne reale Trennwände), mittels eines Regalbediengeräts ablegbar sind. In solche Kanäle können nur Waren eingelagert werden, deren Breite unter Berücksichtigung eines Sicherheitsabstands die Breite des Kanals, also die Breite des jeweils verfügbaren zusammenhängenden freien Lagerplatzes, nicht überschreitet. Innerhalb einzelner Kanäle können allerdings in Querrichtung zur Längserstreckung der Regalböden hintereinanderliegend mehrere Waren eingelagert werden. Die neu einzulagernden Waren werden dabei dem jeweiligen Regalbediengerät, von denen in einer Lagervorrichtung mehrere eingesetzt sein können, mit ihren Verpackungskanten ausgerichtet in jeweils definierter Zwischenablageposition in einem Zwischenspeicher, insbesondere in einem Zwischenspeicher mit ebener Zwischenablagefläche vorgegebener Breite nebeneinander liegend, abgelegt zur Übernahme dargeboten. Das jeweilige Regalbediengerät kann dabei gezielt die jeweilige Position einer neu einzulagernden Ware in diesem Zwischenlager anfahren und die Ware gezielt greifen und übernehmen. Vor der Einlagerung ist neben einer Identifizierung der einzelnen Gegenstände auch eine Ermittlung von deren geometrischen Abmessungen vorgesehen. Die Identifizierung kann dabei automatisch oder im Rahmen eines Handhabungsvorgangs beispielsweise mittels eines Barcodelesers vorgenommen werden. Selbstverständlich sind auch andere Lösungen, beispielsweise elektronischer Art wie etwa auf der Basis der RFID-Technik möglich. Auch für die Ermittlung der Dimensionen sind unterschiedliche Wege gangbar, beispielsweise Messverfahren mittels Ultraschall oder Laser-Strahlen oder mittels optoelektronischer Bildauswertung. Es liegt ebenfalls im Rahmen der Erfindung, wenn die Dimensionen der einzelnen Gegenstände bereits vorab ermittelt worden und etwa aus einem auf den jeweiligen Gegenstand aufgebrachten Etikett (z.B. Barcode oder RFID-Tag) ausgelesen oder anhand einer Identnummer aus einer Stammdaten-Tabelle, die in der Rechnersteuerung gespeichert ist, ermittelt werden kann. Die Dimensionsermittlung kann also direkt oder indirekt erfolgen. Damit später eine automatisierte Auslagerung durch das Regalbediengerät erfolgen kann, werden die Daten zur Identifizierung der von der Steuerung der Lagervorrichtung jeweils gewählten Lagerstelle auf den Regalböden für die jeweilige Ware gespeichert. Bei einem solchen Verfahren ist erfindungsgemäß vorgesehen, dass zumindest ein Teil der neu einzulagernden Waren in der Weise in dem Zwischenspeicher gruppenweise geordnet abgelegt wird, dass jeweils mit einem einzigen Zugriff gleichzeitig mehrere Waren hintereinander liegend von dem jeweiligen Regalbediengerät aufnehmbar und mit einem einzigen Ablagevorgang auf einem freien Lagerplatz eines Regalbodens, insbesondere in jeweils einen der Kanäle auf den Regalböden, einlagerbar sind. Die einzelnen Waren sind im Zwischenlager also zumindest teilweise bereits so orientiert und hintereinander gelegt, wie dies der endgültigen Einlagerung in dem jeweils von der Steuerung ausgewählten Kanal oder freien Lagerplatz entspricht.

Gemäß einer ersten Grundvariante des erfindungsgemäßen Verfahrens erfolgt zweckmäßigerweise die gruppenweise Anordnung der Waren im Zwischenspeicher entsprechend den gleichen geometrischen Anordnungskriterien, die bei der Einlagerung der Waren in die Kanäle berücksichtigt werden. Bei der bevorzugten Verwendung eines Backengreifers für die Aufnahme der einzelnen Waren durch das Regalbediengerät sollte die Anordnung so gewählt werden, dass innerhalb eines Kanals - von dem Regalbediengerät aus gesehen - eine weiter hinten liegende Ware stets gleich breit oder breiter sein muss als jede davor liegende Ware. Dadurch ist gewährleistet, dass jede z.B. in der Mitte oder hinten liegende Ware sofort mit einem Zugriff vom Regalbediengerät ergriffen werden kann, ohne dass hierzu davor liegende Packungen vorher weggeräumt werden müssen. Gegebenenfalls müssen lediglich die mit herausgenommenen aber nicht angeforderten davor liegenden Packungen danach wieder zurückgelagert werden.

Besonders vorteilhaft ist es, bei der Bildung einer Gruppe von Waren in dem Zwischenspeicher zu berücksichtigen, dass Waren, die erfahrungsgemäß mit größerer Häufigkeit im Falle eines Auslieferungsauftrags gemeinsam angefordert werden (bei Arzneimittelpackungen also häufig gemeinsam auf einem Rezept verschriebene Medikamente), bevorzugt jeweils in der Weise in dieselbe Gruppe gegeben werden, dass bei der Auslagerung von dem jeweiligen Regalboden bzw. aus dem jeweiligen Kanal diese Waren durch einen einzigen Zugriff des Regalbediengeräts gemeinsam ausgebbar sind.

Als weiteres vorteilhaftes Ablagekriterium bei der Einlagerung in die einzelnen Kanäle des Lagers kann von der Steuerung berücksichtigt werden, dass besonders häufig auszulagernde Waren (so genannte Schnellläufer) bevorzugt jeweils in der vordersten Ablageposition auf einem Regalboden bzw. innerhalb eines Kanals eingelagert werden und somit für das Regalbediengerät unmittelbar greifbar sind ohne die Notwendigkeit einer Rücklagerung davor lagernder Waren.

Die zur Gruppenbildung in dem Zwischenspeicher gewählte Vorgehensweise kann äußerst einfach gehalten werden. Da üblicherweise die einzelnen Waren nach dem Zufallsprinzip hintereinander zur Einlagerung aufgegeben werden, wechseln die Packungsgrößen aufeinanderfolgender Waren rein zufällig. Dies hängt nicht nur mit der Änderung aufeinanderfolgender unterschiedlicher Waren zusammen, sondern ist auch Folge der zufällig unterschiedlichen Orientierung statt in Längsrichtung einer Packung bei der Aufnahme in den Zwischenspeicher. Eine eher längliche Packung kann beispielsweise in Querrichtung statt in Längsrichtung zugeführt worden sein. Flache Packungen nehmen in der Regel durch die bei der Zuführung wirksamen Transportkräfte eine flachliegende Position ein. Wenn nun eine Ware dem Zwischenspeicher zugeführt werden soll, die nicht mit der unmittelbar vorher oder unmittelbar nachher in dem Zwischenspeicher abgelegten Ware in einer Gruppe zusammenfassbar ist, weil sie die vorgesehenen Kanalgrenzen bzw. den verfügbaren freien Lagerplatz sonst überschreiten würde, wird sie zweckmäßigerweise auf einem Einzelplatz des Zwischenspeichers abgelegt und bleibt dort auch einzeln liegen, auch wenn später noch eine Ware dem Zwischenspeicher zugeführt wird, die mit dieser in einem gemeinsamen Kanal unterbringbar wäre. Hierdurch wird ein aufwändiges Hin- und Herfahren der Plätze des Zwischenspeichers vermieden. Es hat sich gezeigt, dass die Wahrscheinlichkeit, dass aufeinanderfolgende Waren bereits im Zwischenspeicher zu einer für die Ablage in einem Kanal geeigneten Gruppe ausreichend hoch ist, um eine beträchtliche Reduzierung der Zugriffe des Regalbediengeräts bei der Einlagerung in die Kanäle zu erreichen.

Zweckmäßigerweise werden einzeln auf dem Zwischenspeicher abgelegte Waren, soweit es die Kanaltiefe zulässt, bevorzugt in einem teilweise noch freien Kanal abgelegt, in dem bereits eine Ware eingelagert ist, welche besonders häufig zusammen mit der jeweils neu einlagernden Ware in einem Auslagerungsauftrag angefordert wird.

Für eine zweite Grundvariante des Verfahrens sieht die Erfindung vor, dass die einzulagernden Gegenstände in der Reihenfolge, wie sie an der Aufgabestation aufgegeben werden, in einer solchen Weise in Gruppen auf der Zwischenablagefläche abgelegt werden, dass entsprechend den gegebenen Abmessungen der jeweiligen Gegenstände unter weitgehender Ausnutzung der Breite der Zwischenablagefläche möglichst mehrere Gegenstände in Richtung der Breite der Zwischenablage hintereinander liegend eine Gruppe bilden und die einzelnen Gruppen in Richtung der Länge der Zwischenablagefläche nebeneinander liegend angeordnet sind, wobei unmittelbar benachbarte Gruppen jeweils innerhalb von Umschließungsrechtecken liegen, die sich nicht überlappen, sondern vorzugsweise voneinander beabstandet sind. Im Regelfall werden die einzelnen einzulagernden Gegenstände also nicht einfach linear in Längsrichtung des Pufferspeichers nebeneinander abgelegt, sondern möglichst in Gruppen zusammengestellt, die ihrerseits untereinander in Längsrichtung des Pufferspeichers linear nebeneinander liegen, wobei aber innerhalb der Gruppen die einzelnen Gegenstände in Querrichtung hierzu (Breite des Pufferspeichers) hintereinander liegen. Auf diese Weise ergibt sich zwangsläufig eine verbesserte Flächenausnutzung des Pufferspeichers. Dies hat den Vorteil, dass bei gleichem Platzbedarf eine größere Anzahl an Gegenständen gepuffert werden kann, so dass auch für umfangsreiche Anlieferungen von einzulagernden Gegenständen genügend Zwischenspeicherfläche verfügbar ist.

Die Ablage der einzelnen Gegenstände erfolgt zwar in der Reihenfolge, wie sie an der Aufgabestation aufgegeben werden, jedoch nicht völlig ohne Regeln. Die einzelnen Gruppen werden nämlich so nebeneinander abgelegt, dass sie in ein Umschließungsrechteck passen, also in einen virtuellen recheckigen Rahmen. Für die erste in dem Pufferspeicher angelegte Reihe ist diese Regel noch ohne Bedeutung. Sobald aber die erste Reihe (Gruppe) komplett ist, also ein weiterer einzulagernder Gegenstand nicht mehr auf der verfügbaren Breite des Zwischenspeichers anzulegen ist, wird die nächste Reihe daneben belegt. Die Ablageposition wird dann so gewählt, dass dieser weitere Gegenstand erst (vorzugsweise in einem kleinen Sicherheitsabstand) neben dem gedachten Rechteck liegt, welches sämtliche Gegenstände der ersten Reihe im Sinne einer Umhüllungskurve einschließt. Diese Vorgabe hat den Sinn, dass ein Regalbediengerät, das mit einem Backengreifer ausgerüstet ist, jeden Gegenstand einer Reihe erreichen kann, ohne einen Gegenstand aus einer unmittelbar benachbarten Reihe dabei anzustoßen und zu verschieben, so dass die jeweilige Zwischenablageposition verfälscht würde.

Unter dieser Voraussetzung ergibt sich ein weiterer großer Vorteil der vorliegenden Erfindung, der darin besteht, dass der eigentliche Einlagerungsvorgang durch das Regalbediengerät gegenüber der bisher üblichen Vorgehensweise, bei der jeweils immer nur einzelne Gegenstände aus dem Pufferspeicher gegriffen und auf die Regalflächen gelegt werden, beträchtlich verkürzt werden kann. Selbstverständlich ist es möglich, dass diese einzelne Ablage bei Bedarf auch bei dem erfindungsgemäßen Verfahren im Einzelfall angewendet wird. Eine vorteilhafte Weiterbildung der Erfindung sieht jedoch vor, dass das Regalbediengerät zumindest bei einem Teil der Einlagervorgänge eine Gruppe, bei der ein näher zum Regalbediengerät liegender Gegenstand genau so breit oder schmaler ist als jeweils alle vom Regalbediengerät weiter entfernt liegenden Gegenstände dieser Gruppe, mit einem einzigen Zugriff des Backengreifers des Regalbediengeräts aufnimmt und in einem einzigen Ablagevorgang auf einer freien Lagerstelle des Regals einlagert. Damit können mit einem einzigen Verfahrvorgang für das Regalbediengerät gleichzeitig mehrere Gegenstände auf einem Regalboden abgelegt werden. Die hierfür erforderliche Zykluszeit verkürzt sich bezogen auf den einzelnen Gegenstand damit auf einen Bruchteil des bisherigen Werts. Durch die Ablage mehrerer Gegenstände an bezogen auf die Längsrichtung der Regalböden gleicher Ablageposition, also quer zur Längsrichtung lässt sich eine größere Breite der Regalflächen sinnvoll nutzen. Damit ist die Nutzung der Breite nicht allein auf die vergleichsweise selten auftretende Einlagerung besonders langer Artikel quer zur Längsrichtung der Regalböden beschränkt.

Nach einer weiteren vorteilhaften Ausführungsform des erfindungsgemäßen Verfahrens ist vorgesehen, dass das Regalbediengerät bei einer Gruppe, in der ein näher zum Regalbediengerät liegender Gegenstand breiter ist als der nächstweiter entfernt liegende Gegenstand, diese Gruppe in mehreren Teilschritten einlagert, wobei zunächst der oder die vor dem nächstweiter entfernten Gegenstand liegenden Gegenstände mit einem einzigen Zugriff des Backengreifers des Regalbediengeräts aufgenommen und eingelagert werden und danach mit den auf der Zwischenablage noch verbliebenen Gegenstände dieser Gruppe entsprechend verfahren wird.

Ganz besonders vorteilhaft ist es, wenn die Zwischenablagefläche auf mehrere unabhängig voneinander bewegbare Übergabetische oder Tablare aufgeteilt ist und mehrere mit Gegenständen beladene Tablare oder Tische gleichzeitig zur Einlagerung dieser Gegenstände zur Verfügung stehen, wobei das Regalbediengerät bei der Einlagerung wahlfrei auf die Gruppen mehrerer, insbesondere aller noch beladenen Tablare oder Tische und somit gegebenenfalls auf eine große Anzahl zwischengelagerter Gegenstände zugreifen kann.

Insbesondere bei dieser Ausbildung der Erfindung ergeben sich weitere Vorteile, die beispielsweise darin bestehen, dass die Rechnersteuerung beim Zugreifen auf zwischengelagerte Gegenstände und bei deren Einlagerung auf den Regalböden zumindest ein vorgegebenes Sortierkriterium berücksichtigen kann. So ist es möglich, dass einzelne Gegenstände gezielt mit einem anderen Gegenstand an in Längsrichtung der Regalflächen gesehen gleicher Ablageposition eingelagert werden. Dies ist, wie in Zusammenhang mit der ersten Grundvariante des Verfahrens bereits erwähnt, beispielsweise sinnvoll bei unterschiedlichen Arzneimitteln, die vom Arzt bei bestimmten Krankheitsbildern regelmäßig zusammen verschrieben werden. Dadurch lässt sich die Auslagerzeit bei einer entsprechenden Anforderung drastisch reduzieren im Vergleich zu einer getrennten Lagerung derartiger Medikamente. Alternativ könnten als Sortierkriterium beispielsweise auch die Abmessungen der Gegenstände herangezogen werden, um etwa gleich große Gegenstände über die Breite der Regalflächen gesehen gemeinsam abzulegen und dadurch eine besonders gute Flächennutzung zu gewährleisten. Derartige Einlagerungsalgorithmen und -strategien sind nicht Gegenstand der vorliegenden Erfindung.

Wenn die Zwischenablagefläche auf mehrere unabhängig voneinander bewegbare Tablare oder Tische aufgeteilt ist, dann ist nach einer weiteren vorteilhaften Ausführungsform des erfindungsgemäßen Verfahrens vorgesehen, zumindest zeitweilig zwei Regalbediengeräte zeitlich parallel für die Einlagerung der auf einem oder mehreren Tablaren oder Tischen des Pufferspeichers zwischengelagerten Gegenstände einzusetzen, zu gleicher Zeit aber auch die Auflage neu zugegangener Gegenstände zur Zwischenlagerung auf einem anderen Tablar oder Tisch zu ermöglichen. Damit ist das Aufgeben und Zwischenlagern neu zugegangener Gegenstände prozesstechnisch völlig entkoppelt von dem Einlagern zwischengelagerter Gegenstände auf den Regalböden. Beide Vorgänge können somit zeitlich parallel ablaufen, ohne sich gegenseitig zu stören. Auch dies trägt zu einer deutlichen Steigerung der Leistungsfähigkeit der gesamten Lagereinrichtung bei.

In einer weiteren Verfahrensvariante ist vorgesehen, dass ein Gegenstand, für den von der Rechnersteuerung nicht sofort eine geeignete Lagerstelle auf den Regalböden ermittelt werden konnte, zunächst im Zwischenspeicher auf einem Tablar/Tisch verbleibt, während andere Gegenstände ohne Unterbrechung des Aufgebens neu zugegangener Gegenstände auf einem anderen Tablar zwischengelagert und anschließend eingelagert werden. Dabei ist es ohne weiteres möglich, dass das Regalbediengerät einen solchen vorläufig noch nicht einlagerbaren Gegenstand vorübergehend auf ein anderes Tablar innerhalb des Pufferspeichers umlagert, um ein Tablar für die Aufnahme neu zugegangener Gegenstände freizumachen.

Besonders vorteilhaft ist es auch, wenn die Rechnersteuerung so eingerichtet ist, dass im Bedarfsfall ein angeforderter, aber lediglich erst zwischengelagerter Gegenstand ohne vorherige Durchführung einer regulären Einlagerung auf einem Regalboden durch das Regalbediengerät gezielt von dem jeweiligen Tablar aufgenommen und unverzüglich ausgelagert werden kann. Zweckmäßig ist es, die Identifizierung eines Gegenstandes in an sich bekannter Weise während eines manuellen Aufgabevorgangs für einen Gegenstand zu Beginn des Verfahrens vorzunehmen. Die Zuführung eines neu aufgegebenen Gegenstandes zur Zwischenlagerung im Pufferspeicher selbst sollte erfindungsgemäß dagegen möglichst automatisiert erfolgen.

Eine Vorrichtung zur Durchführung des erfindungsgemäßen Verfahrens weist mindestens ein Regal mit mehreren im Abstand übereinander angeordneten Regalböden und mindestens ein Regalbediengerät auf, das zum Ein- und Auslagern der Waren horizontal und vertikal entlang der Regalböden bewegbar ist. Weiterhin ist ein Zwischenspeicher vorgesehen, der im Arbeitsbereich des oder der Regalbediengeräte liegt, in dem die neu einzulagernden Waren zur Einlagerung bereitgestellt werden. Außerdem ist eine Übergabevorrichtung zur Positionierung der einzulagernden Waren in diesem Zwischenspeicher vorgesehen. Ferner verfügt die Vorrichtung über eine Identifizierungseinheit zur Identifizierung der neu einzulagernden Waren, über eine Vermessungseinrichtung zur Ermittlung der für die Einlagerung benötigten Längenabmessungen der Waren und über eine Steuereinheit für das oder die Regalbediengeräte, die mit einem Datenspeicher versehen ist, der mindestens folgende Daten speichert:
- Vertikale Position der Regalböden,
- Positionsdaten in Längsrichtung des jeweiligen Regalbodens für den jeweiligen Kanal, in den eine Ware ablegbar ist,
- Erfasste Längenabmessungen der Waren und
- Position einer Ware innerhalb des jeweiligen Kanals (quer zur Längsrichtung der Regalböden gesehen).

Als Vermessungseinrichtung im Sinne der Erfindung ist auch eine Einrichtung anzusehen, die in der vorstehend bereits beschriebenen Weise die erforderlichen Dimensionen der Waren indirekt ermittelt.

Erfindungsgemäß ist die mit der Steuereinheit steuerungstechnisch verbundene Übergabevorrichtung von der Steuereinheit in der Weise führbar, dass zumindest einzelne der neu einzulagernden Waren gruppenweise geordnet in dem Zwischenspeicher so ablegbar sind, dass mit einem einzigen Zugriff des jeweiligen Regalbediengeräts gleichzeitig mehrere Waren hintereinanderliegend von dem Regalbediengerät aufnehmbar und mit einem einzigen Ablagevorgang in jeweils einen der Kanäle auf den Regalböden einlagerbar sind.

Als Zwischenspeicher kann beispielsweise ein Förderband eingesetzt werden, das bevorzugt zwischen zwei Regalböden verläuft und somit auf jeden Fall im Zugriffsbereich des oder der Regalbediengeräte liegt.

In einer alternativen Ausprägung der Erfindung ist vorgesehen, den Zwischenspeicher in Form eines, vorzugsweise mehrerer in Längsrichtung der Regalböden, insbesondere zwischen zwei Regalböden, hin- und herbewegbarer Übergabetische auszubilden.

Die Übergabevorrichtung kann in einem besonders einfachen Fall als Schieber ausgebildet sein, der die einzelnen Waren positioniert. Eine besonders zweckmäßige Ausbildung der Erfindung sieht als Übergabevorrichtung einen Umsetzer, insbesondere in Form eines einachsigen Roboters vor, der mit einem Backengreifer zur Aufnahme der einzelnen Waren versehen ist. Mit einem solchen Backengreifer lassen sich die Waren problemlos hintereinander gezielt ablegen. Durch eine entsprechende Vorschubbewegung der Lagerfläche des Zwischenspeichers kann der Arbeitsbereich des einachsigen Roboters, wie dies bei bekannten Anlagen bisher ebenfalls bereits der Fall ist, für die Aufnahme der nächsten neu einzulagernden Waren freigemacht werden.

Eine besonders einfache Bauweise ergibt sich, wenn ein Förderer, insbesondere ein Förderband, vorgesehen wird, mit dem die neu einzulagernden Waren von einer außerhalb des Regals liegenden Aufgabestation in den Zugriffsbereich der Übergabevorrichtung förderbar sind. Auf einem solchen Förderer lässt sich die notwendige Vereinzelung der Waren problemlos bewerkstelligen. Die Übergabevorrichtung bringt die neu einzulagernden Waren in den Arbeitsbereich des oder der Regalbediengeräte.

Vorteilhaft führt ein als Zwischenspeicher eingesetztes Förderband die neu einzulagernden Waren von einer Aufgabestation außerhalb des Regals in den Arbeitsbereich des oder der Regalbediengeräte. Um das Lager hinsichtlich des Grundrisses möglichst kompakt zu gestalten, empfiehlt es sich, jeweils zwei sich im parallelen Abstand gegenüberliegende Regale vorzusehen, die eine Lagergasse zwischen sich einschließen, innerhalb deren vorzugsweise zwei Regalbediengeräte unabhängig voneinander betreibbar angeordnet sind. Auf diese Weise lässt sich eine besonders hohe Verfügbarkeit (Betriebssicherheit) der gesamten Anlage gewährleisten und darüber hinaus eine hohe Leistung (kurze Zykluszeiten) hinsichtlich der erforderlichen Ein- und Auslagervorgänge realisieren.

Die Erfindung wird nachfolgend anhand des in der Zeichnung schematisch dargestellten Ausführungsbeispiels näher erläutert. Es zeigen:
- Fig. 1: eine erfindungsgemäße Vorrichtung in Grundriss- und Längsansicht,
- Fig. 2: eine Abwandlung des Ausführungsbeispiels von Fig. 1 im Grundriss,
- Fig. 3: eine Außenansicht einer erfindungsgemäßen Vorrichtung,
- Fig. 4: eine herkömmliche Ablage von Waren in einem Zwischenspeicher,
- Fig. 5, 7, 8: eine erfindungsgemäße Ablage von Waren in einem Zwischenspeicher und
- Fig. 6: eine Ablage von Waren in virtuellen Kanälen auf einem Regalboden.

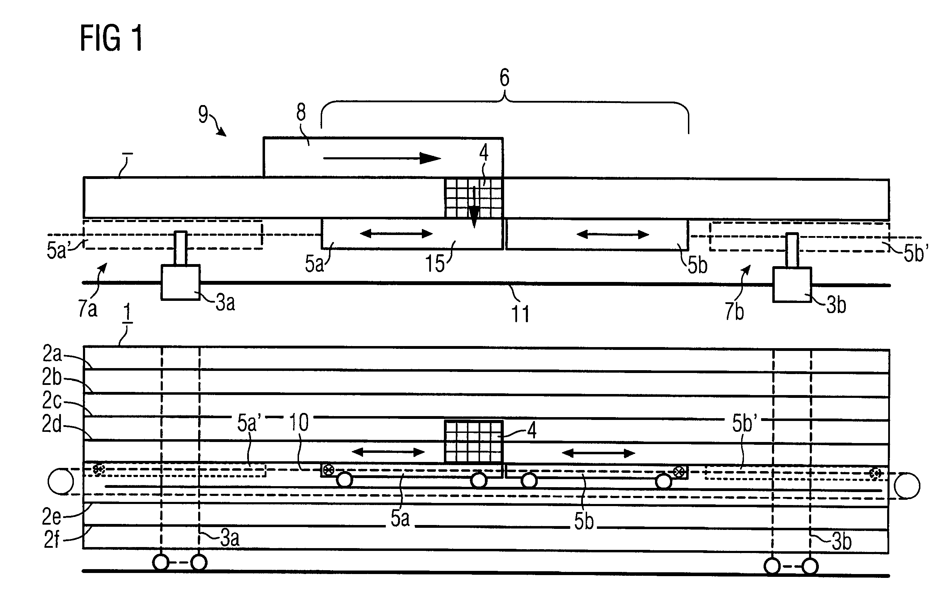

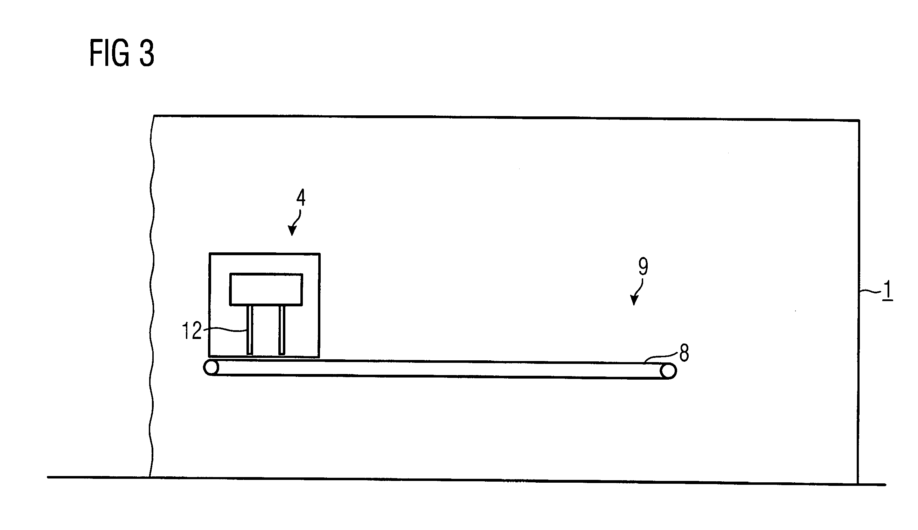

In Figur 1 ist in Form einer Schemazeichnung ein Ausführungsbeispiel für eine erfindungsgemäße Vorrichtung zum unsortierten Lagern insbesondere von Arzneimittelpackungen im Grundriss (oberer Teil von Figur 1) und in einer Seitenansicht (unterer Teil von Figur 1) dargestellt. Ein Regal 1 weist mehrere übereinander angeordnete Lagerebenen in Form von durchgehenden Regalböden 2a - 2f auf, die unterschiedlich voneinander beabstandet und somit zur Einlagerung unterschiedlich hoher Waren geeignet sein können. Die Regalböden 2a -2f können durch zwei einen gemeinsamen Verfahrweg 11 aufweisende Regalbediengeräte 3a, 3b, die horizontal und vertikal verfahrbar sind, bedient werden. Hierzu weisen die Regalbediengeräte 3a, 3b Manipulationseinrichtungen auf, die beispielsweise als Backengreifer ausgebildet und dem Fachmann bekannt sind. Der Verfahrweg 11 erstreckt sich über die gesamte Länge des Regals 1. Die Regalbediengeräte 3a, 3b können beide praktisch über die gesamte Länge des Regals horizontal verfahren werden, können sich gegenseitig aber nicht passieren. Wenn letzteres gewünscht ist, können separate Verfahrwege 11 für die beiden Regalbediengeräte 3a, 3b vorgesehen werden, die in einem ausreichenden Abstand voneinander parallel verlaufen. Außerhalb des von den Regalböden 2a - 2f überdeckten Grundrissbereichs sind innerhalb der Lagergasse, in der die beiden Regalbediengeräte 3a, 3b verfahrbar sind, zwei Übergabetische 5a, 5b als Zwischenspeicher für neu einzulagernde Waren längsverschieblich angeordnet. Andersartige Zwischenspeicher sind selbstverständlich ebenfalls möglich. Wie aus der Seitenansicht hervorgeht, sind die beiden Übergabetische 5a, 5b mit Rädern ausgestattet, also als Wagen ausgebildet. Sie sind motorisch über eine nicht dargestellte Steuereinrichtung, die auch die beiden Regalbediengeräte 3a, 3b steuert, in Längsrichtung des Regals 1 hin und her bewegbar. Hierzu ist ein Antrieb vorgesehen, der im dargestellten Fall schematisch in Form eines Ketten-, Seil- oder Riemenantriebs 10 ausgebildet ist. Zur Einlagerung von Waren in das Regal 1 ist außerhalb des Regals 1, d.h. auf der den Regalbediengeräten 3a, 3b abgewandten Seite des Regals 1 ein Bandförderer 8 angeordnet, auf den die Waren einzeln aufgelegt werden können. Dabei können die einzelnen Waren an einer Aufgabestation 9 beispielsweise von Hand zuvor an einem mit der Steuerung verbundenen Scanner vorbeigeführt werden, um jede Ware eindeutig zu identifizieren. Jede einzelne Ware wird dann durch das Förderband 8 in Richtung des dargestellten Pfeils nach rechts weiter transportiert in den Bereich einer Übergabevorrichtung 4. Sobald eine Ware in den Arbeitsbereich eines in Figur 3 in der Seitenansicht von außen dargestellten Umsetzers 12 der Übergabevorrichtung 4 gelangt, was beispielsweise mittels nicht dargestellter Lichtschranken detektiert werden kann, greift der vorzugsweise als einachsiger Roboter ausgebildete Umsetzer 12, der über einen Backengreifer verfügt, die Ware und transportiert sie horizontal durch eine entsprechende Öffnung in der äußeren Regalwand und in den Regalböden 2 hindurch auf den im Übernahmebereich 6 stehenden Übergabetisch 5a und legt sie in definierter Zwischenablageposition auf dem Übergabetisch 5a ab.

Die Identifizierung der Waren kann auch automatisch z.B. während der Übergabe durch den Umsetzer 12 erfolgen, wenn in diesem Bereich entsprechende Scaneinrichtungen angeordnet sind. Auch die zur Vermessung der Waren erforderlichen Messeinrichtungen (z.B. basierend auf Leuchtdioden oder Ultraschallsensoren) werden zweckmäßig im Bereich der Übergabevorrichtung 4 angeordnet.

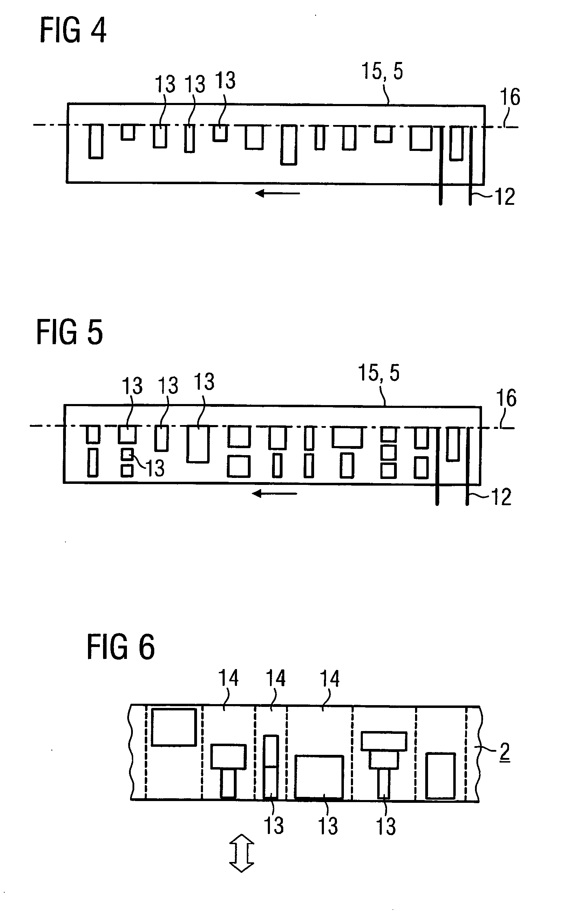

Nach dem Ablegen im Zwischenspeicher wurde gemäß der bisher bekannten Verfahrensweise der Übergabetisch 5a regelmäßig um ein kleines Stück im Sinne einer Vorschubbewegung verfahren, um die Aufnahme einer weiteren Ware, die nach Zurückfahren des Umsetzers 12 vom Bandförderer 8 geholt wurde, an der relativ zum Umsetzer 12 gleichen Stelle zu ermöglichen. Bei der Ablage auf dem Zwischenspeicher 15 (Übergabetisch 5) wurde bisher, wie dies in Figur 4 dargestellt ist, die Stirnseite einer Ware 13 vorzugsweise an einer parallel zur Längserstreckung des Zwischenspeichers 15 verlaufenden Bezugslinie 16 ausgerichtet, um eine klare Übergabeposition für die Waren 13 zu gewährleisten. Insgesamt ergab sich dabei eine einfache lineare Kette von Waren 13, die im Abstand voneinander jeweils einzeln nebeneinander in Längsrichtung des Zwischenspeichers 15 in bekannter Zwischenablageposition abgelegt waren. Die vorliegende Erfindung geht nun von diesem generell ausschließlich einzelnen Zwischenablegen der Waren 13 ab und sieht vor, wie es im Ergebnis exemplarisch in der Figur 5 dargestellt ist, dass einzelne Waren 13 auch quer zur Bezugslinie 16, also nicht nur in Längsrichtung des Zwischenspeichers 15 nebeneinander, sondern auch quer zur Längsorientierung des Zwischenspeichers 15 hintereinanderliegend abgelegt werden können, sofern die Packungsgrößen und deren Orientierung, die durch den Umsetzer 12 nach dem Ergreifen nicht mehr geändert wird, dies gegebenenfalls hinsichtlich der vorstehend bereits erläuterten Zwischenablagekriterien gestatten. Man erkennt aus Figur 5, dass einige Waren 13 ganz allein an einer Position in Längsrichtung der Linie 16 abgelegt sind, während andere Waren 13 in Gruppen zu zweit oder sogar zu dritt gemeinsam an einer solchen Position liegen. Dies wird dadurch erreicht, dass nach Ablage einer Ware 13 vor der Ausführung der Vorschubbewegung des Zwischenspeichers 15 jeweils der noch freie Raum an der Zwischenablageposition mit der entsprechenden Längendimension der nächsten in dem Zwischenspeicher unterzubringenden Ware 13 verglichen wird. Wenn der verfügbare Platz ausreicht und (im Fall der ersten Verfahrensgrundvariante) auch das Breitenkriterium (Tannenbaum-Struktur) erfüllt ist, können die betreffenden Waren 13 quer zur Linie 16 hintereinander angeordnet werden. Anderenfalls wird der Vorschub betätigt und die jeweilige Ware 13 auf dem nächsten Zwischenablageplatz abgelegt, wo sie unter Umständen mit der darauf folgenden Ware 13 eine Gruppe bilden kann oder aber einzeln bleibt. Auf diese Weise kann sukzessiv eine Befüllung des Zwischenspeichers 15 erfolgen. Wesentlich ist, dass die Steuereinheit die Informationen über die einzelnen Zwischenablagepositionen (längs und quer) auf dem Übergabetisch zugeleitet bekommt und speichert. Die Querpositionen ergeben sich indirekt aus den entsprechenden Längenabmessungen der Waren 13.

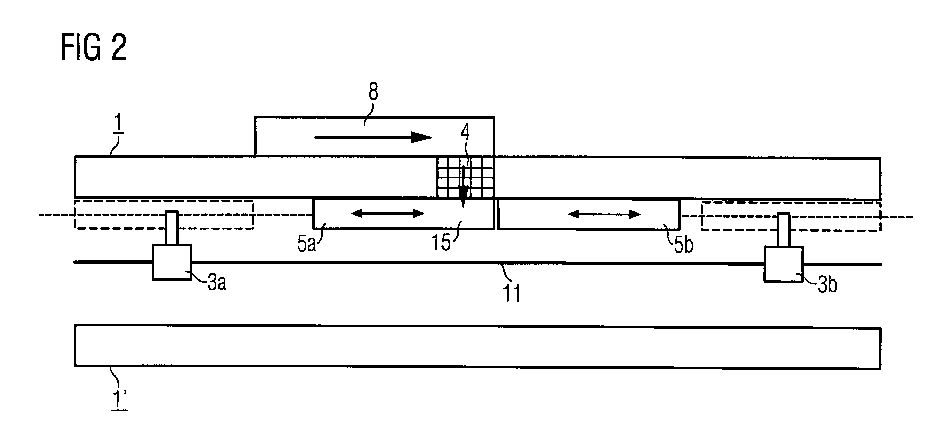

Sobald der Übergabetisch 5a (Fig. 2) einen ausreichenden Befüllungsgrad erreicht hat oder keine weiteren Waren 13 mehr zur Einlagerung vorgesehen sind oder aber aus einem anderen Grunde der Beginn einer Einlagerung der Waren 13 auf den Regalböden 2a - 2f oder unter Umständen sogar eine sofortige Auslagerung einzelner Waren 13 gewünscht wird, fährt der Übergabetisch 5a auf Veranlassung der Steuereinheit in eine Entnahmeposition, die im vorliegenden Fall am linken Ende des Regals 1 vorgesehen (gestrichelt dargestellt) und mit 5a' bezeichnet ist. In Kenntnis einerseits der genauen Entnahmeposition 7a (Fig. 1), also der Stelle, an der der Übergabetisch 5a während der Übernahme der einzelnen Waren 13 durch eines der Regalbediengerät 3a, 3b verharrt, und andererseits der (relativen) Zwischenablagepositionen auf dem Übergabetisch 5a kann die Steuerung das jeweilige Regalbediengerät 3a, 3b so positionieren, dass ein gezielter Zugriff auf vereinzelt abgelegte oder auf Gruppen der neu einzulagernden Waren auf dem Übergabetisch 5a gewährleistet ist. Sobald der Übergabetisch 5a nach links verfahren wird und den Übernahmebereich 6 räumt, kann der zweite Übergabetisch 5b in entsprechender Weise innerhalb des Übernahmebereichs 6 so positioniert werden, dass über den Umsetzer 12 weitere Waren 13 auf dem Übergabetisch 5b zwischengelagert werden, während das Regalbediengerät 3a den Übergabetisch 5a sukzessiv leert. Dabei werden die einzelnen Gruppen der quer zur Längsorientierung des Übergabetischs 5a zwischengelagerten Waren 13 jeweils mit einem einzigen Zugriff des Regalbediengeräts 3a, 3b gegriffen und in einen freien Kanal 14 oder eine sonstige freie Lagerstelle auf einem Regalboden 2 endgültig eingelagert, wie dies aus der schematischen Darstellung der Fig. 6 hervorgeht. Die virtuellen Kanäle 14, die nicht durch körperliche Zwischenwände, sondern lediglich durch gespeicherte Kanalgrenzen datenmäßig voneinander getrennt sind, sind in der Zeichnung gestrichelt dargestellt. Man erkennt ohne weiteres, dass die Breite der einzelnen Kanäle 14 unterschiedlich sein kann. Die Ein- und Ausfahrbewegung des Greifers des nicht dargestellten Regalbediengeräts ist durch einen Doppelpfeil quer zur Längsrichtung des Regalbodens 2 angedeutet.
Man erkennt, dass alle Gegenstände 13 ähnlich wie in dem Pufferspeicher ebenfalls möglichst in Gruppen an einer Längsposition der Regalflächen abgelegt werden. Selbstverständlich sind auch Gegenstände 13 dabei, die einzeln lagern. Dies kann bereits bei der Einlagerung so geschehen sein (z. B. äußerster rechter Lagerkanal 14), kann aber auch daran liegen, dass ein ursprünglich davor lagernder Gegenstand bereits wieder ausgelagert wurde (z. B. äußerster linker Lagerkanal 14). Diese Lagerkanäle 14 werden von der Rechnersteuerung des Lagers in ähnlicher Weise wie Fächer behandelt, die durch physische Trennwände gegeneinander abgeschottet sind. Der Sinn dieser Lagerkanäle liegt darin, dass der Backengreifer 26 des Regalbediengerätes 20 in jedem Fall frei an den Kanalgrenzen eines Lagerkanals 22 einfahren können soll, ohne auf Gegenstände benachbarter Lagerkanäle zu stoßen. Es liegt auf der Hand, dass bei Einlagerung einer Gruppe von Waren 13 mit einem einzigen Einlagerungsvorgang der dafür erforderliche Zeitbedarf nur noch einen Bruchteil des Zeitbedarfs ausmacht, der für das bisher übliche einzelne Einlagern jeder Ware 13 erforderlich ist. Grundsätzlich ist es möglich, dass auch das zweite Regalbediengerät 3b von dem Übergabetisch 5a einzelne Waren zur Einlagerung entnimmt. Es kann aber auch vorgesehen sein, dass das Regalbediengerät 3b im rechten Teil des Lagers 1 untätig verharrt oder aber beispielsweise parallel zur Einlagerung auf entsprechende Anforderung einzelne eingelagerte Waren auslagert. Nach entsprechender Befüllung wird dann der Übergabetisch 5b aus dem Übernahmebereich 6 heraus in die entsprechende Entnahmeposition 7b verfahren, die vorzugsweise spiegelbildlich zur Entnahmeposition 7a des Übergabetischs 5a angeordnet ist, also im Bereich des rechten Endes des Regals 1 liegt. Hier kann nun in entsprechender Weise eine Einlagerung der Waren über das Regalbediengerät 3b vorgenommen werden. Nach Leerung des Übergabetischs 5a kann dieser wiederum in den Übernahmebereich 6 zur Aufnahme weiterer Waren verfahren werden, bis alle neu einzulagernden Waren bearbeitet sind.

Während in Figur 1 das Regal 1 in einer einzigen Zeile angeordnet ist, ist in der Abwandlung gemäß Figur 2 vorgesehen, dass dem Regal 1 gegenüber ein zweites Regal 1' im parallelen Abstand zugeordnet wird. Die beiden Regalbediengeräte 3a, 3b sind innerhalb der zwischen den beiden Regalen 1, 1' gebildeten Lagergasse über die gesamte Länge der Regale 1, 1' verfahrbar. Beide Regalbediengeräte 3a, 3b sind vorzugsweise so ausgebildet, dass sie jeweils beide Regale 1, 1' bedienen können. Hierzu sind deren Manipulationseinrichtungen zur Handhabung der Waren um eine vertikale Drehachse verschwenkbar angeordnet. Im Übrigen ist die Funktion dieser Vorrichtung zum Lagern von Waren die gleiche wie in Figur 1. Obwohl in den Figuren 1 und 2 die Übergabetische 5 außerhalb des von den Regalböden 2 überdeckten Grundrissbereichs liegen, ist es bevorzugt, diese innerhalb des Grundrissbereichs anzuordnen, um die gesamte Vorrichtung möglichst kompakt bauen zu können. Statt der Übergabetische 5 könnten beispielsweise auch Tablare als Zwischenspeicher eingesetzt werden, die auf beliebige Weise zwischen einer Beladeposition im Übernahmebereich 6 und einer Entladeposition (Entnahmeposition) bewegbar sind.

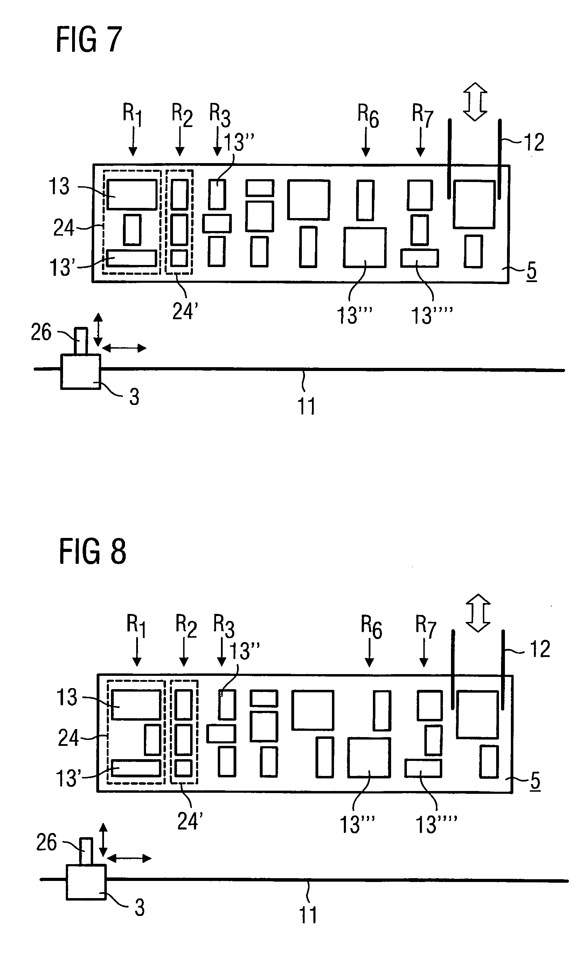

Ein Beispiel für ein Ablageschema im Zwischenspeicher gemäß der zweiten Grundvariante des erfindungsgemäßen Verfahrens ist in Figur 7 dargestellt.

Dort ist außer dem Umsetzbackengreifer 14 auch ein auf einer Fahrschiene 11 verfahrbares Regalbediengerät 3 mit Backengreifer 26 angedeutet. Diese beiden Handhabungseinrichtungen 12, 26 befinden sich, wie dies auch aus den Figuren 1 bis 3 hervorgeht, auf unterschiedlichen Längsseiten des zur Zwischenspeicherung benutzten Tablars 5. Wie vorstehend bereits beschrieben, werden die einzelnen Gegenstände 13 nacheinander einzeln in Gruppen (Reihen quer zur Längsrichtung des Tablars 5) aufgelegt. Mehrere dieser Reihen sind in Figur 7 dargestellt und mit den Bezugszeichen R₁ bis R₇ bezeichnet. Erfindungsgemäß dürfen die Gegenstände 13 nur dann in eine Reihe R eingestellt werden, wenn die Breite des Tablars 5 noch ausreichend frei ist und wenn ein Umschließungsrechteck dieser Reihe sich nicht mit demjenigen der unmittelbar benachbarten Reihe überlappt. In Figur 7 ist ein solches Umschließungsrechteck für die äußerste linke Reihe R₁ mit dem Bezugszeichen 24 versehen. Die Breite dieses Umschließungsrechtecks entspricht der Breite des breitesten Gegenstandes 13, die Länge in diesem Fall etwa der Breite des Tablars 5. Bei der Belegung dieser ersten Reihe R₁ wurde als erstes der Gegenstand 13' aufgelegt, danach der mittlere Gegenstand ohne Bezugszeichen und schließlich der Gegenstand 13, der die Breite des Umschließungsrechteckes 24 bestimmt. Der nächste relativ kleine Gegenstand passte aufgrund der Breitenbeschränkung nicht mehr in dieser Reihe R₁ auf das Tablar 5 und musste daher in der nächsten Reihe R2 untergebracht werden, die lediglich relativ schmale Gegenstände beinhaltet und daher ein entsprechend schmales Umschließungsrechteck 24' aufweist.

Wenn das Regalbediengerät 3 in Figur 7 das in der dort dargestellten Weise belegte Tablar 5, das sich dann selbstverständlich in einer Übergabeposition (Entladeposition) befinden müsste, also die dargestellte Übernahmeposition verlassen haben müsste, entleeren soll, dann könnte es im Grundsatz mit einer beliebigen Reihe beginnen, da alle Reihen R aufgrund der Bedingung der sich nicht überlappenden sondern voneinander beabstandeten Umschließungsrechtecke frei zugreifbar sind. Wenn keine besonderen Sortierkriterien vorgegeben sind, würde die Entladung beispielsweise von links von der Reihe R₁ aus beginnen. Der Greifer 26 des Regalbediengerätes 3 könnte zwar mit dem Zugriff bis auf den hinteren Gegenstand 13 sämtliche drei Gegenstände 13 der Reihe R₁ aufnehmen. Er dürfte aufgrund der Bedingung der Tannenbaumstruktur diese jedoch nicht in einem Lagerkanal 14 ablegen. Vielmehr muss zunächst der Gegenstand 13' ergriffen und als Einzelstück an einer geeigneten Lagerstelle eingelagert werden. Danach können allerdings die beiden verbliebenen Gegenstände, bei denen die Tannenbaumstruktur erfüllt wäre, gemeinsam ergriffen und in einen Lagerkanal eingestellt werden. Dies entspräche in Figur 6 beispielsweise dem zweiten Lagerkanal 14 von links. Die Reihe R₂ könnte dagegen, weil sämtliche Gegenstände 13 die gleiche Breite aufweisen, in einem einzigen Zugriff erfasst und zur Einlagerung gebracht werden. Bei der Reihe R₃ könnten die beiden ersten Gegenstände gemeinsam erfasst und eingelagert werden. Der verbleibende Gegenstand 13" müsste in einem separaten Einlagervorgang behandelt werden. Entsprechend einzeln behandelt werden müssten auch die Gegenstände 13"' und 13"" in den Reihen R₆ und R₇. Insgesamt ergibt sich jedoch, dass in vielen Fällen mehrere Gegenstände in einem Schritt zusammen erfasst und eingelagert werden können, so dass sich wegen der Einsparung von Verfahrwegen eine drastische Reduzierung der insgesamt für die Einlagerung erforderlichen Zeit ergibt. Dadurch kann die Umschlaggeschwindigkeit für die Tablare 5 entsprechend erhöht werden.

Das Ablageschema in Figur 7 entspricht einem Bild, das sich ergibt, wenn der Backengreifer 12 beide Greifbacken symmetrisch betätigt und daher die einzelnen Waren 13 entsprechend symmetrisch zur jeweiligen Übernahmeposition des Tablars 5 ablegt. Vorteilhaft kann der Backengreifer 12 auch mit einer feststehenden und lediglich einer beweglichen Greifbacke ausgestaltet sein. In diesem Fall ergibt sich ein etwas anderes Ablagebild, wie es in entsprechender Weise in Figur 8 dargestellt ist. Dort ist die linke Greifbacke des Backengreifers 12 beweglich. Daher sind alle Waren 13 einer Reihe R jeweils mit ihrer rechten Längsseite fluchtend zur Position der feststehenden Greiferbacke im Zeitpunkt der Ablage auf dem Tablar 5 ausgerichtet.

## Patentansprüche

1. Verfahren zur Einlagerung von Waren (13), die als im wesentlichen quaderförmige Packungseinheiten ausgebildet sind, insbesondere von Arzneimittelpackungen, in eine automatisierte Lagervorrichtung mit einer Mehrzahl von im Abstand übereinander angeordneten Regalböden (2), auf denen die Waren (13) jeweils in der Fläche nebeneinander, insbesondere in virtuellen Kanälen (14), mittels mindestens eines Regalbediengeräts (3) ablegbar sind, wobei zumindest in einem Teil der Flächen der Regalböden (2), insbesondere innerhalb mehrerer Kanäle (14) jeweils mehrere Waren (13) - in Querrichtung zur Längserstreckung der Regalböden (2) gesehen - hintereinanderliegend angeordnet werden und die einzulagernden Waren (13) dem mindestens einen Regalbediengerät (3) in jeweils definierter Zwischenablageposition und mit ihren Kanten ausgerichtet in einem Zwischenspeicher (15), insbesondere in einem Zwischenspeicher (15) mit ebener Zwischenablagefläche vorgegebener Breite nebeneinander liegend, abgelegt zugeführt werden, so dass das mindestens eine Regalbediengerät (3) gezielt auf die neu einzulagernden Waren (13) zugreifen kann, und wobei die Waren (13) vor der Einlagerung identifiziert und direkt oder indirekt ihre Dimensionen ermittelt werden und Daten zur Identifizierung der von einer Steuerung gewählten Lagerstelle für die spätere automatisierte Auslagerung durch das Regalbediengerät (3) gespeichert werden,
**dadurch gekennzeichnet, dass**
zumindest ein Teil der neu einzulagernden Waren (13) in der Weise in dem Zwischenspeicher (15) gruppenweise geordnet abgelegt wird, dass jeweils mit einem einzigen Zugriff gleichzeitig mehrere Waren (13) hintereinanderliegend von dem mindestens einen Regalbediengerät (3) aufnehmbar und mit einem einzigen Ablagevorgang auf einer freien Fläche eines Regalboden (2), insbesondere in jeweils einen der Kanäle (14) auf den Regalböden (2), einlagerbar sind.

2. Verfahren nach Anspruch 1,
**dadurch gekennzeichnet, dass**
die gruppenweise Ordnung der Waren (13) im Zwischenspeicher (15) entsprechend den gleichen vorgegebenen geometrischen Anordnungskriterien erfolgt, die bei der Einlagerung der Waren (13) in die Kanäle (14) berücksichtigt werden.

3. Verfahren nach Anspruch 2,
**dadurch gekennzeichnet, dass**
als Anordnungskriterium berücksichtigt wird, dass innerhalb eines Kanals (14) - von dem Regalbediengerät (3) aus gesehen - eine weiter hinten liegende Ware (13) stets gleich breit oder breiter sein muss als jede davor liegende Ware (13).

4. Verfahren nach einem der Ansprüche 1 - 3,
**dadurch gekennzeichnet, dass**
bei der Bildung einer Gruppe in dem Zwischenspeicher (15) berücksichtigt wird, das Waren (13), die erfahrungsgemäß mit größerer Häufigkeit im Falle eines Auslagerungsauftrags gemeinsam angefordert werden, bevorzugt jeweils in der Weise in dieselbe Gruppe gegeben werden, so dass bei der Auslagerung von dem jeweiligen Regalboden (2), insbesondere aus dem jeweiligen Kanal (14) diese Waren (13) durch einen einzigen Zugriff des mindestens einen Regalbediengeräts (3), auslagerbar sind.

5. Verfahren nach einem der Ansprüche 1 - 4,
**dadurch gekennzeichnet, dass**
besonders häufig auszulagernde Waren (13) bevorzugt jeweils in der vordersten Ablageposition eines Regalbodens (2) eingelagert werden.

6. Verfahren nach einem der Ansprüche 1 - 5,
**dadurch gekennzeichnet, dass**
Waren (13), die nicht mit der unmittelbar vorher oder unmittelbar nachher in dem Zwischenspeicher (15) abgelegten bzw. abzulegenden Ware (13), in einer Gruppe zusammenfassbar sind, jeweils auf einem Einzelplatz des Zwischenspeichers (15) abgelegt werden.

7. Verfahren nach Anspruch 6,
**dadurch gekennzeichnet, dass**
einzeln auf dem Zwischenspeicher (15) abgelegte Waren (13) bevorzugt in einen noch teilweise freien Kanal (14) eingelagert werden, in dem bereits eine Ware (13) gelagert ist, die erfahrungsgemäß besonders häufig zusammen mit der jeweiligen neu zulagernden Ware (13) in einem Auslagerungsauftrag angefordert wird.

8. Verfahren nach einem der Ansprüche 1 - 7,
**dadurch gekennzeichnet, dass**
das mindestens eine Regalbediengerät (3) die Waren (13) jeweils mittels eines Backengreifers aufnimmt.

9. Verfahren nach Anspruch 1 oder 8,
**dadurch gekennzeichnet,**
**dass** die einzulagernden Waren (13) in der Reihenfolge, wie sie aufgegeben werden, in der Weise in Gruppen auf der Zwischenablagefläche abgelegt werden, dass entsprechend den gegebenen Abmessungen der jeweiligen Waren (13) unter weitgehender Ausnutzung der Breite der Zwischenablagefläche möglichst mehrere Waren (13) in Richtung der Breite der Zwischenablage hintereinander liegend eine Gruppe bilden und die einzelnen Gruppen in Richtung der Länge der Zwischenablagefläche nebeneinander liegend angeordnet sind, wobei unmittelbar benachbarte Gruppen jeweils innerhalb von Umschließungsrechtecken liegen, die sich nicht überlappen, insbesondere voneinander beabstandet sind.

10. Verfahren nach Anspruch 9,
**dadurch gekennzeichnet,**
**dass** das Regalbediengerät (3) zumindest bei einem Teil der Einlagerungsvorgänge eine Gruppe, bei der ein näher zum Regalbediengerät (3) liegende Ware (13) genau so breit oder schmaler ist als jeweils alle vom Regalbediengerät (3) weiter entfernt liegenden Waren (13) dieser Gruppe, mit einem einzigen Zugriff des Backengreifers des Regalbediengeräts (3) aufnimmt und in einem einzigen Ablagevorgang auf einer freien Lagerstelle des Regals (1) einlagert.

11. Verfahren nach einem der Ansprüche 9 - 10,
**dadurch gekennzeichnet,**
**dass** das Regalbediengerät (3) zumindest bei einem Teil der Einlagerungsvorgänge bei einer Gruppe, in der eine näher zum Regalbediengerät (3) liegende Ware (13) breiter ist als die nächstweiter entfernt liegende Ware (13), diese Gruppe in mehreren Teilschritten einlagert, wobei zunächst die vor des nächstweiter entfernten Ware (13) liegenden Waren mit einem einzigen Zugriff des Backengreifers des Regalbediengeräts (3) aufgenommen und eingelagert werden und danach mit den auf der Zwischenablage noch verbliebenen Waren (13) dieser Gruppe entsprechend verfahren wird.

12. Verfahren nach einem der Ansprüche 9 - 10,
**dadurch gekennzeichnet,**
**dass** die Zwischenablagefläche auf mehrere unabhängig voneinander bewegbare Tablare (5) aufgeteilt ist und mehrere mit Waren (13) beladene Tablare (5) gleichzeitig zur Einlagerung dieser Waren (13) zur Verfügung stehen, wobei das Regalbediengerät (3) bei der Einlagerung wahlfrei auf die Gruppen mehrerer, insbesondere aller noch mit Waren (13) beladenen Tablare (5) zugreifen kann.

13. Verfahren nach einem der Ansprüche 9 - 12,
**dadurch gekennzeichnet,**
**dass** die Steuerung beim Zugreifen auf zwischengelagerte Waren (3) und bei deren Einlagerung auf den Regalböden (2) mindestens ein vorgegebenes Sortierkriterium berücksichtigt.

14. Verfahren nach einem der Ansprüche 9 - 13,
**dadurch gekennzeichnet,**
**dass** die Zwischenablagefläche auf mehrere unabhängig voneinander bewegbare Tablare (5) aufgeteilt ist und zumindest zeitweilig zwei Regalbediengeräte (3) zeitlich parallel die Einlagerung zwischengelagerter Waren (13) von einem oder mehreren Tablaren (5) vornehmen, währenddessen auf einem anderen Tablar (5) neu zugegangene Waren (13) zur Zwischenlagerung aufgelegt werden.

15. Verfahren nach einem der Ansprüche 12 - 14,
**dadurch gekennzeichnet,**
**dass** eine Ware (13), für die von der Steuerung noch keine geeignete Lagerstelle auf den Regalböden (2) ermittelt werden konnte, im Zwischenspeicher (15) auf einem Tablar (5) verbleibt, während andere Waren (13) ohne Unterbrechung des Aufgebens neu zugegangener Waren (13) auf einem anderen Tablar (5) zwischengelagert und anschließend eingelagert werden.

16. Verfahren nach einem der Ansprüche 9 - 15,
**dadurch gekennzeichnet,**
**dass** die Steuerung im Bedarfsfall eine angeforderte, aber lediglich zwischengelagerte Ware (13) ohne Vornahme einer regulären Einlagerung auf einem Regalboden (2) durch das Regalbediengerät (3) gezielt von dem jeweiligen Tablar (5) aufnehmen und auslagern lässt.

17. Verfahren nach einem der Ansprüche 1 - 8,
**dadurch gekennzeichnet,**
**dass** die Identifizierung einer Ware (13) während eines manuellen Aufgabevorgangs zu Beginn des Verfahrens erfolgt.

18. Verfahren nach Anspruch 9,
**dadurch gekennzeichnet,**
**dass** die Zuführung einer neu aufgegebenen Ware (13) zur Zwischenlagerung im Zwischenspeicher (15) automatisiert erfolgt.

19. Vorrichtung zur Durchführung des Verfahren nach einem der Ansprüche 1 - 18, mit
- mindestens einem Regal (1) mit mehreren übereinander angeordneten Regalböden(2),
- mindestens einem Regalbediengerät (3), das zum Ein- und Auslagern der Waren horizontal und vertikal entlang der Regalböden (2) bewegbar ist,
- mindestens einem Zwischenspeicher (15) im Arbeitsbereich des mindestens einen Regalbediengeräts (3), in dem die neu einzulagernden Waren (13) zur Einlagerung bereitstellbar sind,
- einer Übergabevorrichtung (4) zur Positionierung der einzulagernden Waren in dem Zwischenspeicher (15),
- einer Identifizierungseinrichtung zur Identifizierung der neu einzulagernden Waren (13),
- einer Vermessungseinrichtung zur Ermittlung der für die Einlagerung benötigten Längenabmessungen der Waren (13) und
- einer Steuereinheit für das mindestens eine Regalbediengerät (3), das mit einem Datenspeicher für mindestens folgende Daten versehen ist:
- vertikale Position der Regalböden (2),
- Positionsdaten in Längsrichtung des jeweiligen Regalbodens (2) für den jeweiligen Kanal (14), in dem eine Ware (13) abgelegt ist,
- erfasste Längenabmessungen der Waren (13),
- Position der Ware (13) innerhalb des jeweiligen Kanals (14) quer zur Längsrichtung der Regalböden (2),
**dadurch gekennzeichnet, dass**
die Übergabevorrichtung (4) steuerungstechnisch mit der Steuereinheit verbunden ist und von der Steuereinheit in der Weise führbar ist, dass zumindest einzelne der neu einzulagernden Waren (13) gruppenweise angeordnet in dem Zwischenspeicher (15) so ablegbar sind, dass mit einem einzigen Zugriff des mindestens einen Regalbediengeräts (3) gleichzeitig mehrere Waren (13) hintereinanderliegend von dem Regalbediengerät (3) aufnehmbar und mit einem einzigen Ablagevorgang auf einem freien Lagerplatz eines Regalbodens (3), insbesondere in jeweils einen der Kanäle (14) auf den Regalböden (2), einlagerbar sind.

20. Vorrichtung nach Anspruch 19,
**dadurch gekennzeichnet, dass**
der Zwischenspeicher (15) als Förderband, insbesondere als zwischen zwei Regalböden (2) verlaufendes Förderband, ausgebildet ist.

21. Vorrichtung nach Anspruch 19,
**dadurch gekennzeichnet, dass**
der Zwischenspeicher (15) in Form mindestens eines, insbesondere mehrerer in Längsrichtung der Regalböden (2), insbesondere zwischen zwei Regalböden (2), hin- und herbewegbarer Übergabetische oder Tablare (5) ausgebildet ist.

22. Vorrichtung nach einem der Ansprüche 19 - 21,
**dadurch gekennzeichnet, dass**
die Übergabevorrichtung (4) als Schieber ausgebildet ist.

23. Vorrichtung nach einem der Ansprüche 19 - 21,
**dadurch gekennzeichnet, dass**
die Übergabevorrichtung (4) als Umsetzer (12) insbesondere als einachsiger Roboter mit einem Backengreifer ausgebildet ist.

24. Vorrichtung nach einem der Ansprüche 19 - 23,
**dadurch gekennzeichnet, dass**
ein Förderer (8), insbesondere ein Förderband vorgesehen ist, mit dem die neu einzulagernden Waren (13) von einer außerhalb des mindestens einen Regals (2) liegenden Aufgabestation (9) in den Zugriffsbereich der Übergabevorrichtung (4) förderbar sind.

25. Vorrichtung nach einem der Ansprüche 19 - 24,
**dadurch gekennzeichnet, dass**
die Übergabevorrichtung (4) die neu einzulagernden Waren (13) in den Arbeitsbereich des mindestens einen Regalbediengeräts (3) bringt.

26. Vorrichtung nach Anspruch 20,
**dadurch gekennzeichnet, dass**
das Förderband des Zwischenspeichers (15) die neu einzulagernden Waren von einer Aufgabestation (9) außerhalb des mindestens einen Regals (2) in den Arbeitsbereich des mindestens einen Regalbediengeräts (3) fördert.

27. Vorrichtung nach einem der Ansprüche 19 - 26,
**dadurch gekennzeichnet, dass**
zwei sich im parallelen Abstand gegenüberliegende Regale (1, 1') vorgesehen sind.

28. Vorrichtung nach Anspruch 27,
**dadurch gekennzeichnet, dass**
in der zwischen den Regalen (1, 1') gebildeten Lagergasse zwei unabhängig voneinander betreibbare Regalbediengeräte (3a, 3b) vorgesehen sind.

## Claims

1. Method of placing goods units (13), in the form- of substantially cuboid unit packs, and in particular packs of medicaments, in store in an automated storage arrangement having a plurality of shelves (2) laid out one above the other in a spaced arrangement, on which shelves (2) the goods units (13) can each be placed down next to one another horizontally, and in particular in virtual corridors (14), by means of at least one rack-serving unit (3), a plurality of goods units (13) each being arranged to be situated one behind the other - looking in the direction transverse to the longitudinal extent of the shelves (2) - in at least part of the areas of the shelves (2) and in particular within a plurality of corridors (14), and the goods units (13) to be placed in store being supplied to the at least one rack-serving unit (3), placed down next to one another, in a temporary storage means (15), and in particular in a temporary storage means (15) having a plane area of preset width for temporary storage, in a position for temporary storage which is defined in each case and while aligned by their edges, thus enabling the at least one rack-serving unit (3) to selectively take hold of the new goods units (13) to be placed in store, and prior to being placed in store the goods units (13) being identified and their dimensions being directly or indirectly determined and data to identify the storage location which is selected by a control system being stored for subsequent automated removal from storage by the rack-serving unit (3), **characterised in that** at least some of the new goods units (13) to be placed in store are placed down in the temporary storage means (15) organised into groups, in such a way that a plurality of goods units (13) situated one behind the other can, in each case, be picked up simultaneously by the at least one rack-serving unit (3) in a single taking-hold action and can be placed in store on a free area of a shelf (2), and in particular in a given one of the corridors (14) on the shelves (2), in a single placing-down operation.

2. Method according to Claim 1, **characterised in that** the organisation of the goods units (13) into groups in the temporary storage means (15) takes place in accordance with the same preset geometrical criteria governing arrangement as are taken into account when the goods units (13) are placed in store in the corridors (14).

3. Method according to Claim 2, **characterised in that** a criterion governing arrangement which is taken into account is that within a corridor (14) - as seen from the rack-serving unit (3) - a goods unit (13) situated further towards the rear must always be equally as wide as, or wider than, any goods unit (13) situated in front of it.

4. Method according to any one of Claims 1 to 3, **characterised in that**, in forming a group in the temporary storage means (15), account is taken of the fact that goods units (13) which, from experience, are more frequently asked for together in the event of a requisition for removal from store should each preferably be placed in the same group, in such a way that, at the time of removal from store from the given shelf (2), and in particular from the given corridor (14), the goods units (13) in question can be removed from store by a single taking-hold action by the at least one rack-serving unit (3).

5. Method according to any one of Claims 1 to 4, **characterised in that** goods units (13) which need to be removed from store particularly frequently are each preferably placed in store in the placing-down position at the very front of a shelf (2).

6. Method according to any one of Claims 1 to 5, **characterised in that** goods units (13) which cannot be combined into a group with the goods unit (13) which was placed down, or is to be placed down, in the temporary storage means (15) immediately beforehand or immediately afterwards respectively are each placed down at an individual point in the temporary storage means (15).

7. Method according to Claim 6, **characterised in that** goods units (13) which are placed down individually in the temporary storage means (15) are preferably placed in store in a corridor (14) which is still partly free and in which there is already stored a goods unit (13) which, from experience, in a requisition for removal from store, will be asked for particularly frequently together with the given new goods unit (13) to be placed in store.

8. Method according to any one of Claims 1 to 7, **characterised in that** the at least one rack-serving unit (3) picks up the goods units (13) each time by means of a jawed gripper.

9. Method according to Claim 1 or 8, **characterised in that** the goods units (13) to be placed in store are placed down on the area for temporary storage, in the sequence in which they are fed in, in groups, in such a way that, in line with the given dimensions of the particular goods units (13), as many as possible more goods units (13) than one, situated one behind the other in the widthwise direction of the temporary storage means, form a group, thus largely using the full width of the area for temporary storage, and the individual groups are arranged to be situated next to one another in the lengthwise direction of the area for temporary storage, immediately adjacent groups each being situated within enclosing rectangles which do not overlap and in particular are spaced away from one another.

10. Method according to Claim 9, **characterised in that**, at least in some of the placing-in-store operations, the rack-serving unit (3) picks up in a single taking-hold action by the jawed gripper of the rack-serving unit (3), and places in store at a free storage location on the rack (1) in a single placing-down operation, a group in which a goods unit (13) situated closer to the rack-serving unit (3) is exactly as wide as, or is narrower than, all the goods units (13) in the group concerned which are situated further away from the rack-serving unit (3).

11. Method according to either of Claims 9 and 10, **characterised in that**, at least in some of the placing-in-store operations involving a group in which a goods unit (13) situated closer to the rack serving unit (3) is wider than the next, more distantly situated goods unit (13), the rack-serving unit (3) places this group in store in a plurality of sub-steps, in which case those goods units which are situated in front of the next, more distantly situated goods unit (13) are picked up and placed in store in a single taking-hold action by the jawed gripper of the rack-serving unit (3), and after this a corresponding procedure is adopted with those goods units (13) belonging to this group which are still present on the area for temporary storage.

12. Method according to either of Claims 9 and 10, **characterised in that** the area for temporary storage is divided into a plurality of platforms (5) able to be moved independently of one another and a plurality of platforms (5) loaded with goods units (13) are available simultaneously for the placing in store of these goods units (13), the rack-serving unit (3) being able to take hold, in the course of placing in store, in a freely selectable manner, of the groups on a plurality of platforms (5) which are still loaded with goods units (13), and in particular on all the platforms (5) which are still loaded with goods units (13).

13. Method according to any one of Claims 9 to 12, **characterised in that**, when goods units (3) placed in temporary storage are being taken hold of, and when the said goods units (3) are being placed in store on the shelves (2), the control system takes into account at least one preset criterion for sorting.

14. Method according to any one of Claims 9 to 13, **characterised in that** the area for temporary storage is divided into a plurality of platforms (5) able to be moved independently of one another and, at least at times, two rack-serving units (3) perform the placing in store of goods units (13) in temporary storage from one or more platforms (5),in parallel with one another in time, during which process new goods units (13) which have arrived for temporary storage are placed on a different platform (5).

15. Method according to any one of Claims 12 to 14, **characterised in that** a goods unit (13) for which the control system has not yet been able to determine a suitable storage location on the shelves (2) is left on a platform (5) in the temporary storage means (15) while, with no interruption to the infeed of new incoming goods units (13), other goods units (13) are temporarily stored and are then placed in store on and from a different platform (5).

16. Method according to any one of Claims 9 to 15, **characterised in that**, when required, the control system causes a goods unit (13) which is asked for but has only been temporarily stored to be picked up and removed from store by the rack-serving unit (3) from the given platform (5) without a regular placing-in-store on a shelf (2) being performed.

17. Method according to any one of Claims 1 to 8, **characterised in that** the identification of a goods unit (13) takes place during a manual infeed operation at the beginning of the method.

18. Method according to Claim 9, **characterised in that** the supply for temporary storage in the temporary storage means (15) of a new goods unit (13) which is fed in takes place by automated means.

19. Arrangement for carrying out the method according to any one of Claims 1 to 18, having
- at least one rack (1) having a plurality of shelves (2) laid out one above the other,
- at least one rack-serving unit (3) which can be moved horizontally and vertically along the shelves (2) to place the goods units in store and to remove them from store,
- at least one temporary storage means (15) within the operating range of the at least one rack-serving unit (3), in which temporary storage means (15) the new goods units (13) to be placed in store can be presented for placing in store,
- a transfer device (4) for positioning in the temporary storage means (15) the goods units which are to be placed in store,
- an identifying means to identify the new goods units (13) to be placed in store,
- a measuring means to determine the lengthwise dimensions of the goods units (13), which lengthwise dimensions are required for the placing in store, and
- a control unit for the at least one rack-serving unit (3), which is provided with a data memory for at least the following items of data:
- the vertical positions of the shelves (2),
- positional data, in the longitudinal direction of the given shelf (2), for the given corridor (14) in which a goods unit (13) is placed down,
- lengthwise dimensions which have been logged of the goods units (13),
- the position of the goods unit (13) within the given corridor (14) transversely to the longitudinal direction of the shelves (2),
**characterised in that** the transfer device (4) is connected to the control unit for control purposes and can be guided by the control unit in such a way that at least individual ones of the new goods units (13) to be placed in store can be placed down in the temporary storage means (15) arranged into groups, in such a way that a plurality of goods units (13) situated one behind the other can be picked up simultaneously by the at least one rack-serving unit (3) in a single taking-hold action of the rack-serving unit (3) and can be placed in store at a free storage point on a shelf (3), and in particular in a given one of the corridors (14) on the shelves (2), in a single placing-down operation.

20. Arrangement according to Claim 19, **characterised in that** the temporary storage means (15) is in the form of a conveyor belt and in particular a conveyor belt extending between two shelves (2).

21. Arrangement according to Claim 19, **characterised in that** the temporary storage means (15) is in the form of at least one, and in particular a plurality of, transfer tables or platforms (5) which are able to be moved to and fro in the longitudinal direction of the shelves (2) and in particular between two shelves (2).

22. Arrangement according to any one of Claims 19 to 21, **characterised in that** the transfer device (4) is in the form of a slider.

23. Arrangement according to any one of Claims 19 to 21, **characterised in that** the transfer device (4) is in the form of a displacer (12) and in particular a single-axis robot having a jawed gripper

24. Arrangement according to any one of Claims 19 to 23, **characterised in that** a feeder (8), and in particular a conveyor belt, is provided by which the new goods units (13) to be placed in store can be fed from an infeed station (9) situated away from the at least one rack (2) into the region in which the transfer device (4) is able to take hold.

25. Arrangement according to any one of Claims 19 to 24, **characterised in that** the transfer device (4) moves the new goods units (13) to be placed in store into the operating range of the at least one rack-serving unit (3).

26. Arrangement according to Claim 20, **characterised in that** the conveyor belt forming the temporary storage means (15) feeds the new goods units to be placed in store from an infeed station (9) away from the at least one rack (2) into the operating range of the at least one rack-serving unit (3).

27. Arrangement according to any one of Claims 19 to 26, **characterised in that** two racks (1, 1') are provided which are situated opposite one another in parallel at a distance.

28. Arrangement according to Claim 27, **characterised in that** two rack-serving units (3a, 3b) able to be operated independently of one another are provided in the aisle formed between the racks (1, 1').

## Revendications

1. Procédé de stockage de produits (13), qui sont réalisés comme des unités d'emballage essentiellement en forme de parallélépipède, en particulier d'emballages de médicaments, dans un dispositif de stockage automatisé comportant une pluralité d'étagères (2) disposées les unes au-dessus des autres à distance, sur lesquelles les produits (13) peuvent être déposés respectivement sur la surface les uns à côté des autres, en particulier dans des canaux virtuels (14), au moyen d'au moins un transstockeur (3), respectivement plusieurs produits (13) - vus dans le sens transversal à l'extension longitudinale des étagères (2) - étant disposés les uns derrière les autres du moins sur une partie des surfaces des étagères (2), en particulier à l'intérieur de plusieurs canaux (14) et les produits (13) à stocker étant amenés à l'au moins un transstockeur (3) déposés dans une position de dépôt intermédiaire respectivement définie et avec leurs arêtes alignées dans un entrepôt (15), en particulier les uns à côté des autres dans un entrepôt (15) avec une surface de dépôt intermédiaire plane d'une largeur prédéfinie, de sorte que l'au moins un transstockeur (3) peut accéder de manière ciblée aux nouveaux produits (13) à stocker, et les produits (13) étant identifiés avant le stockage et leurs dimensions étant déterminées directement ou indirectement et les données d'identification du lieu de stockage choisi par un dispositif de commande étant enregistrées pour le déstockage ultérieur automatisé par le transstockeur (3),
**caractérisé en ce que**
au moins une partie des nouveaux produits (13) à stocker est déposée de manière rangée par groupes dans l'entrepôt (15) de façon que plusieurs produits (13) disposés les uns derrière les autres peuvent être pris en même temps par l'au moins un transstockeur (3) avec respectivement une seule saisie et peuvent être stockés avec une seule procédure de dépôt sur une surface libre d'une étagère (2), en particulier dans respectivement un des canaux (14) sur les étagères (2).

2. Procédé selon la revendication 1,
**caractérisé en ce que**
le rangement par groupes des produits (13) dans l'entrepôt (15) s'effectue selon les mêmes critères d'agencement géométriques prédéfinis que ceux pris en compte lors du stockage des produits (13) dans les canaux (14).

3. Procédé selon la revendication 2,
**caractérisé en ce que**
l'on considère comme critère d'agencement le fait qu'à l'intérieur d'un canal (14) - vu depuis le transstockeur (3) - un produit (13) situé plus en arrière doit toujours être aussi large ou plus large que chaque produit (13) situé devant.

4. Procédé selon l'une quelconque des revendications 1 - 3,
**caractérisé en ce que**
lors de la constitution d'un groupe dans l'entrepôt (15), on considère que des produits (13), qui par expérience sont demandés ensemble à une fréquence plus élevée dans le cas d'un ordre de déstockage, sont placés de préférence respectivement dans le même groupe, de manière que lors du déstockage de l'étagère (2) correspondante, en particulier du canal (14) respectif, ces produits (13) peuvent être déstockés par une seule saisie de l'au moins un transstockeur (3).

5. Procédé selon l'une quelconque des revendications 1 - 4,
**caractérisé en ce que**
des produits (13) à déstocker particulièrement souvent sont stockés de préférence respectivement dans la position de dépôt la plus en avant d'une étagère (2).

6. Procédé selon l'une quelconque des revendications 1 - 5,
**caractérisé en ce que**
des produits (13), qui ne peuvent pas être regroupés avec le produit (13) à déposer et/ou déposé immédiatement avant ou immédiatement après dans l'entrepôt (15), sont déposés respectivement à un emplacement individuel de l'entrepôt (15).

7. Procédé selon la revendication 6,
**caractérisé en ce que**
des produits (13) déposés individuellement sur l'entrepôt (15) sont stockés de préférence dans un canal (14) encore partiellement libre, dans lequel est déjà stocké un produit (13), qui par expérience est demandé particulièrement souvent avec le nouveau produit (13) à stocker correspondant dans un ordre de déstockage.

8. Procédé selon l'une quelconque des revendications 1 à 7,
**caractérisé en ce que**
l'au moins un transstockeur (3) prend les produits (13) respectivement au moyen d'une pince.

9. Procédé selon la revendication 1 à 8,
**caractérisé en ce que**
les produits (13) à stocker sont déposés dans l'ordre, dans lequel ils sont amenés, en groupes sur la surface de dépôt intermédiaire de manière qu'en fonction des dimensions données des produits (13) respectifs en exploitant à quelques détails près la largeur de la surface de dépôt intermédiaire, si possible plusieurs produits (13) situés les uns derrière les autres dans le sens de la largeur de l'entrepôt forment un groupe et chaque groupe est disposé l'un à côté de l'autre dans le sens de la longueur de la surface de dépôt intermédiaire, des groupes à proximité immédiate se trouvant respectivement à l'intérieur de rectangles de délimitation, qui ne se chevauchent pas, en particulier espacés les uns des autres.

10. Procédé selon la revendication 9,
**caractérisé en ce que**
le transstockeur (3) du moins sur une partie des procédures de stockage prend avec une seule saisie de la pince du transstockeur (3) un groupe, dans lequel un produit (13) situé plus près du transstockeur (3) est exactement aussi large ou moins large que respectivement tous les produits (13) de ce groupe plus éloignés du transstockeur (3) et le stocke en une seule procédure de dépôt à un lieu de stockage libre du rayonnage (1).

11. Procédé selon l'une quelconque des revendications 9 - 10,
**caractérisé en ce**
**que** le transstockeur (3) du moins sur une partie des procédures de stockage sur un groupe, dans lequel un produit (13) situé plus près du transstockeur (3) est plus large que le produit (13) immédiatement plus éloigné, stocke ce groupe en plusieurs étapes partielles, les produits situés devant le produit (13) immédiatement plus éloigné étant d'abord pris et stockés avec une seule saisie de la pince du transstockeur (3) puis déplacés avec les produits (13) de ce groupe restant encore sur le dépôt intermédiaire.

12. Procédé selon l'une quelconque des revendications 9 - 10,
**caractérisé en ce**
**que** la surface de dépôt intermédiaire est répartie sur plusieurs tablettes (5) mobiles indépendamment les unes des autres et plusieurs tablettes (5) chargées de produits (13) sont disponibles en même temps pour le stockage de ces produits (13), le transstockeur (3) pouvant accéder lors du stockage au choix aux groupes de plusieurs en particulier de toutes les tablettes (5) encore chargées de produits (13).

13. Procédé selon l'une quelconque des revendications 9 - 12,
**caractérisé en ce que**
lors de l'accès à des produits (3) entreposés et lors de leur stockage sur les étagères (2) le dispositif de commande tient compte d'au moins un critère de tri prédéfini.

14. Procédé selon l'une quelconque des revendications 9 - 13,
**caractérisé en ce que**
la surface de dépôt intermédiaire est répartie sur plusieurs tablettes (5) mobiles indépendamment les unes des autres et deux transstockeurs (3) procèdent parallèlement dans le temps, du moins par moments, au stockage de produits (13) entreposés depuis une ou plusieurs tablettes (5), pendant que de nouveaux produits (13) arrivés sont posés pour l'entreposage sur une autre tablette (5).

15. Procédé selon l'une quelconque des revendications 12 - 14,
**caractérisé en ce**
**qu'**un produit (13), pour lequel aucun lieu de stockage adéquat sur les étagères (2) n'a encore pu être déterminé par le dispositif de commande, reste dans l'entrepôt (15) sur une tablette (5) alors que d'autres produits (13) sont entreposés sur une autre tablette (5) sans interruption de la dépose de nouveaux produits (13) arrivés et sont ensuite stockés.

16. Procédé selon l'une quelconque des revendications 9 - 15,
**caractérisé en ce**
**que** le dispositif de commande fait prendre et déstocker si nécessaire un produit (13) demandé, mais seulement entreposé, sans procéder à un stockage régulier sur une étagère (2) par le transstockeur (3) de manière ciblée de la tablette (5) respective.

17. Procédé selon l'une quelconque des revendications 1 - 8,
**caractérisé en ce**
**que** l'identification d'un produit (13) pendant une procédure de dépôt manuelle a lieu au début du procédé.

18. Procédé selon la revendication 9,
**caractérisé en ce**
**qu'**un nouveau produit (13) déposé est amené de manière automatisée pour l'entreposage dans l'entrepôt (15).

19. Dispositif permettant de réaliser le procédé selon l'une quelconque des revendications 1 - 18 comportant
- au moins un rayonnage (1) avec plusieurs étagères (2) superposées,
- au moins un transstockeur (3), qui peut être déplacé horizontalement et verticalement le long des étagères (2) pour le stockage et le déstockage des produits,
- au moins un entrepôt (15) dans la zone de travail de l'au moins un transstockeur (3), dans lequel les nouveaux produits (13) à stocker peuvent être mis à disposition pour le stockage,
- un dispositif de remise (4) permettant de positionner les produits à stocker dans l'entrepôt (15),
- un dispositif d'identification permettant d'identifier les nouveaux produits (13) à stocker,
- un dispositif de mesurage permettant de déterminer la longueur des produits (13) nécessaire au stockage et
- une unité de commande pour l'au moins un transstockeur (3), qui est équipé d'une mémoire de données pour au moins les données suivantes :
- position verticale des étagères (2),
- données de position dans le sens longitudinal de l'étagère (2) respective pour le canal (14) respectif, dans lequel est déposé un produit (13),
- longueurs saisies des produits (13),
- position du produit (13) à l'intérieur du canal (14) respectif transversalement au sens longitudinal des étagères (2),
**caractérisé en ce que** le dispositif de remise (4) est relié du point de vue de la technique de commande à l'unité de commande et peut être conduit par l'unité de commande de manière qu'au moins certains des nouveaux produits (13) à stocker sont disposés par groupes dans l'entrepôt (15) de sorte qu'avec une seule saisie de l'au moins un transstockeur (3), plusieurs produits (13) situés les uns derrière les autres peuvent être pris en même temps par le transstockeur (3) et peuvent être stockés avec une seule procédure de dépôt à un lieu de stockage libre d'une étagère (2), en particulier dans respectivement un des canaux (14) sur les étagères (2).

20. Dispositif selon la revendication 19,
**caractérisé en ce que**
l'entrepôt (15) est réalisé sous forme de bande transporteuse, en particulier sous forme de bande transporteuse passant entre deux étagères (2).

21. Dispositif selon la revendication 19,
**caractérisé en ce que**
l'entrepôt (15) est réalisé sous forme d'au moins une, en particulier de plusieurs tables de remise ou tablettes (5) pouvant être imprimées d'un mouvement de va-et-vient dans le sens longitudinal des étagères (2), en particulier entre deux étagères (2).

22. Dispositif selon l'une quelconque des revendications 19 - 21,
**caractérisé en ce que**
le dispositif de remise (4) est réalisé sous forme de poussoir.

23. Dispositif selon l'une quelconque des revendications 19 - 21,
**caractérisé en ce que**
le dispositif de remise (4) est réalisé sous forme de dispositif de transfert (12) en particulier sous forme de robot à un axe avec une pince.

24. Dispositif selon l'une quelconque des revendications 19 - 23,
**caractérisé en ce que**
un convoyeur (8), en particulier une bande transporteuse, est prévu avec lequel les nouveaux produits (13) à stocker peuvent être transportés d'une station de dépôt (9) située à l'extérieur de l'au moins une étagère (2) dans la zone d'accès du dispositif de remise (4).

25. Dispositif selon l'une quelconque des revendications 19 - 24,
**caractérisé en ce que**
le dispositif de remise (4) amène les nouveaux produits (13) à stocker dans la zone de travail de l'au moins un transstockeur (3).

26. Dispositif selon la revendication 20,
**caractérisé en ce que**
la bande transporteuse de l'entrepôt (15) transporte les nouveaux produits à stocker d'une station de dépôt (9) à l'extérieur de l'au moins une étagère (2) dans la zone de travail de l'au moins un transstockeur (3).

27. Dispositif selon l'une quelconque des revendications 19 - 26,
**caractérisé en ce que** deux rayonnages (1, 1') se faisant face à distance parallèle sont prévus.

28. Dispositif selon la revendication 27,
**caractérisé en ce que**
dans l'allée de stockage formée entre les rayonnages (1, 1') deux transstockeurs (3a, 3b) exploitables indépendamment l'un de l'autre sont prévus.
